# EUROPEAN PATENT SPECIFICATION

(11) **EP 3 670 334 B1**
(45) Date of publication and mention of the grant of the patent: **10.03.2021**
(21) Application number: 19219059.3
(22) Date of filing: 20.12.2019
(51) Int. Cl.: B64C 13/04

(54) **HAND-OPERABLE MAN-MACHINE INTERFACE FOR AIRCRAFT, DRONE REMOTE CONTROL SYSTEMS, FLIGHT SIMULATORS, SPACECRAFT AND THE LIKE**
HANDBEDIENBARE MENSCH-MASCHINE-SCHNITTSTELLE FÜR FLUGZEUGE, DROHNENFERNSTEUERUNGSSYSTEME, FLUGSIMULATOREN, RAUMFAHRZEUGE UND DERGLEICHEN
INTERFACE HOMME-MACHINE À COMMANDE MANUELLE POUR AÉRONEFS, SYSTÈMES DE TÉLÉCOMMANDE DE DRONES, SIMULATEURS DE VOL, ENGINS SPATIAUX ET ANALOGUES

(30) Priority: 21.12.2018 EP 18425104; 07.02.2019 IT 201900001799
(43) Date of publication of application: 24.06.2020
(73) Proprietor: LEONARDO S.p.A., 00195 Roma (IT)
(72) Inventor: BARILE, Giovanni, 00071 POMEZIA (RM) (IT); VETTORI, Leonardo, 00071 POMEZIA (RM) (IT)
(74) Representative: Sordini, Lorenzo

(56) References cited:
- KR-A- 20180 094 553
- US-A- 5 472 156
- US-A1- 2017 308 113

## Description

### CROSS-REFERENCE TO RELATED APPLICATIONS

This patent application claims priority from European patent application no. 18425104.9 filed on 21/12/2018 and Italian patent application no. 102019000001799 filed on 07/02/2019.

### TECHNICAL FIELD OF THE INVENTION

The present invention relates to a hand-operable Man-Machine Interface (MMI) for use on board aircraft, in drone remote control systems, in flight simulators, on board spacecraft, and for similar applications.

In particular, the present invention concerns the specific technical sector of avionic MMIs based on hand-operable control sticks.

### STATE OF THE ART

As is known, Man-Machine Interfaces (MMIs) are typically used on board aircraft (e.g., airplanes and helicopters, see document US5472156A) and spacecraft, and in drone remote control systems to allow users to:
- control operation of
   - the aircraft/spacecraft/drones (e.g., to pilot them), or
   - onboard systems/devices/apparatus/equipment; and/or
- activate/deactivate/control execution of one or more predefined functions performable by the aircraft/spacecraft/drones and/or by onboard systems/devices/apparatus/equipment.

Generally, such MMIs include control sticks that are designed to be gripped and moved by a user with one or two hands and that are fitted with one or more User Interface (UI) devices of the hard-key type (such as buttons, switches, levers, etc.) designed to be operated by the user with one or more fingers.

An MMI of the above type allow a user (e.g., a pilot) to control many different functions (e.g., flight-related functions) by means of a combined use of the control stick and of the hard-key-type UI devices installed thereon (typically, provided on a handgrip arranged at an upper end of the control stick).

For example, an MMI of the above type may be advantageously exploited:
- on board an aircraft to enable attitude/flight control (e.g., for controlling ailerons, elevator, rudder, flaps, etc. of an airplane, or for controlling cyclic pitch of rotor blades of a rotorcraft/helicopter);
- on board a military combat aircraft (e.g., a fighter plane or a military combat helicopter) to allow controlling an external sight system and/or a weapon aiming and firing system;
- on board a spacecraft for controlling attitude/flight thereof; and
- in a drone remote control system to enable remote control of attitude/flight of an Unmanned Aerial Vehicle (UAV - commonly known as drone).

In this context, it is worth drawing attention on the fact that the concept of "HOTAS" (which stands for Hands On Throttle-And-Stick) is broadly known in avionics, i.e., the concept of providing buttons and switches on the throttle lever and the flight control stick in an aircraft's cockpit so as to allow pilots to access vital cockpit functions and fly the aircraft without having to remove their hands from the controls.

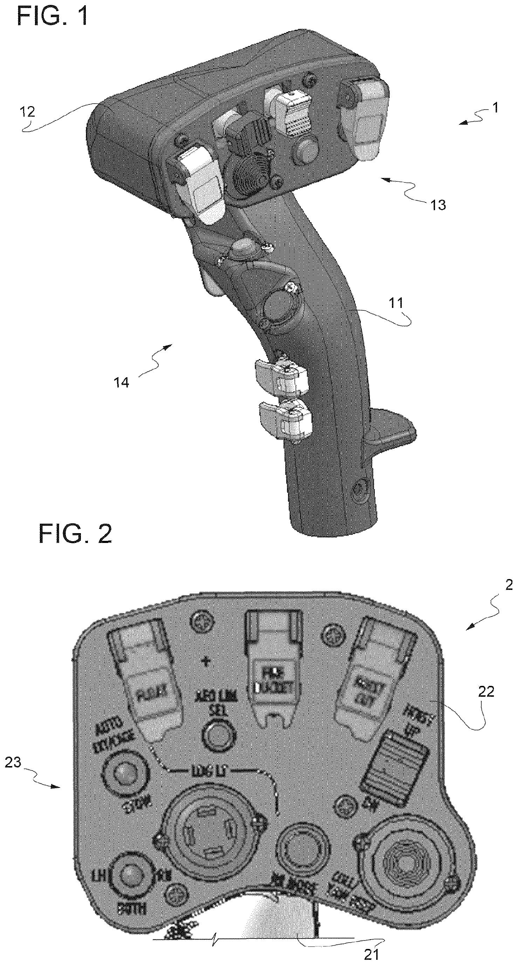

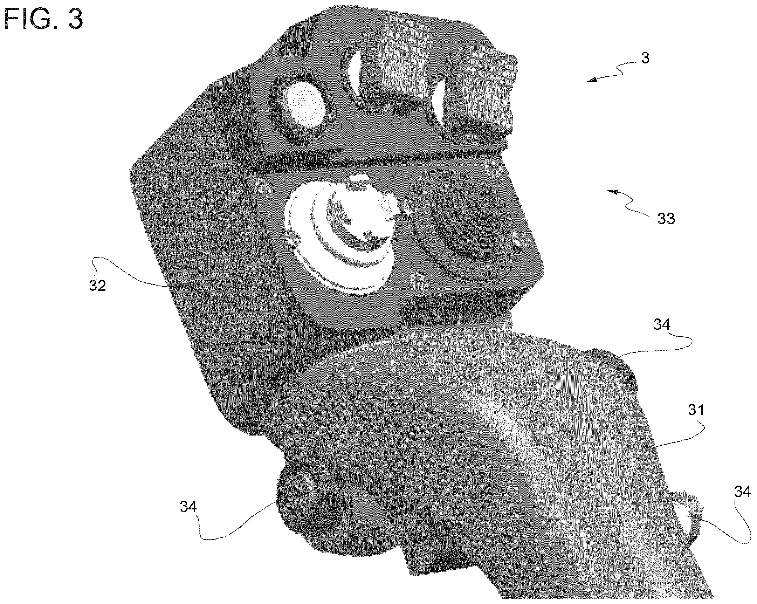

Figures 1-3 show three traditional HOTAS devices fitted with hard-key-type UI devices. In particular, Figures 1-3 show, respectively, a first handgrip (denoted as a whole by 1), a second handgrip (denoted as a whole by 2) and a third handgrip (denoted as a whole by 3) for cyclic and collective control sticks of helicopters.

In detail, the first, second and third handgrips 1, 2 and 3 include, each,
- a respective elongated portion 11, 21, 31 and
- a respective upper portion 12, 22, 32 arranged at an upper end of the respective elongated portion 11, 21, 31, and fitted with respective first hard-key-type UI devices 13, 23, 33.

Moreover, in the first and third handgrips 1 and 3, the respective elongated portions 11 and 31 are fitted, each, with respective second hard-key-type UI devices 14, 34.

Moreover, MMIs of the above type are typically used also in flight simulators to control a virtual aircraft and/or one or more respective virtual onboard systems/devices/apparatus/equipment in a simulated flight scenario.

MMIs of the above type follow the general trend of greater integration of functions (activatable/deactivatable/controllable by means of hard-key-type UI devices of various kinds, such as buttons, switches, levers, etc.) and, hence, of an increasing number of elements integrated on control sticks.

Nowadays, traditional hard-key-type UI devices are no longer sufficient to satisfy requests typical of avionic sector for ever-increasing numbers of functions requiring larger amounts and more types of complex components, such as toggles, potentiometers, Hall effect switches and customized expensive components.

In fact, more functions means a larger amount of more complex hard-key-type UI devices, which in turn means the necessity for more space in a physically limited volume (i.e., larger dimensions and increased weight of MMIs' body), whereby problems of space and weight and, hence, safety and ergonomic issues arise.

Moreover, it is worth noting that any switch has a non-negligible cost, especially customized switches that are typically very expensive with a delivery time of about several months.

Additionally, it is important to note also that it typically takes a long time (e.g., months or even years) to design, develop, test and validate a new avionic hand-operable MMI. Thence, if a request for integration of one or more additional functions comes up when the design, development, testing and validation process has already started (or, even worse, ended), it is usually necessary to begin anew, thereby resulting in additional/new non-negligible costs and times of design, development, testing and validation.

In other words, the reconfiguration/modification of an existing avionic hand-operable MMI or of an avionic hand-operable MMI already under development is a difficult task that typically requires long times and extremely high costs to be accomplished.

### OBJECT AND SUMMARY OF THE INVENTION

In general, object of the prevent invention is that of providing an hand-operable Man-Machine Interface (MMI) for use on board aircraft, in drone remote control systems, in flight simulators, on board spacecraft, and for similar applications, which hand-operable MMI allows to overcome, at least in part, the above technical drawbacks of currently known solutions.

In particular, a first specific object of the present invention is that of providing an avionic hand-operable MMI that is more easily reconfigurable/modifiable than existing avionic hand-operable MMIs.

Moreover, a second specific object of the present invention is that of providing an avionic hand-operable MMI affected by fewer problems of space and weight and fewer safety and ergonomic issues than current avionic hand-operable MMIs.

These and other objects are achieved by the present invention in that it relates to avionic hand-operable Man-Machine Interface (MMI), as defined in the appended claims.

More specifically, the present invention concerns an avionic hand-operable MMI including a hand-operable control stick that is:
- designed to be gripped and moved by a user with one or two hands to carry out a main control function related to an aircraft/spacecraft/drone; and
- fitted with User Interface (UI) means designed to be operated by the user with one or more fingers to perform secondary control functions related to the aircraft/spacecraft/drone, wherein said UI means include haptic touch screen means.

Preferably, the avionic hand-operable MMI includes also a control electronics that is coupled to the haptic touch screen means and is configured to:
- display a plurality of Graphical User Interface (GUI) items on said haptic touch screen means, wherein each displayed GUI item is associated with a respective secondary control function; and,
- in response to, and based on, a touch of the user on a displayed GUI item,
   - provide the user with a corresponding haptic feedback and
   - activate/deactivate/control execution of the respective secondary control function associated with the touched GUI item.

### BRIEF DESCRIPTION OF THE DRAWINGS

For a better understanding of the present invention, preferred embodiments, which are intended purely by way of non-limiting examples, will now be described with reference to the attached drawings (all not to scale), where:
- Figures 1-3 show three traditional handgrips for cyclic and collective control sticks of helicopters;
- Figures 4-7 show four examples of handgrips for cyclic and collective control sticks of helicopters according to four illustrative, non-limiting embodiments of the present invention; and
- Figure 8 schematically illustrates an example of functional architecture of haptic touch screen means and a control electronics of an avionic hand-operable MMI according to an illustrative, non-limiting embodiment of the present invention.

### DETAILED DESCRIPTION OF PREFERRED EMBODIMENTS OF THE INVENTION

The following discussion is presented to enable a person skilled in the art to make and use the invention. Various modifications to the embodiments shown and described will be readily apparent to those skilled in the art, without departing from the scope of the present invention as claimed. Thence, the present invention is not intended to be limited to the embodiments shown and described, but is to be accorded the widest scope of protection consistent with the principles and features disclosed herein and defined in the appended claims.

The present invention stems from Applicant's idea of using haptic touch screen technology in avionic hand-operable Man-Machine Interfaces (MMIs) to replace, completely or partially, traditional hard-key-type User Interface (UI) devices.

In particular, the present invention concerns an avionic hand-operable Man-Machine Interface (MMI) including a hand-operable control stick that is:
- designed to be gripped and moved by a user with one or two hands to carry out a main control function related to an aircraft/spacecraft/drone; and
- fitted with User Interface (UI) means designed to be operated by the user with one or more fingers to perform secondary control functions related to the aircraft/spacecraft/drone, wherein said UI means include haptic touch screen means.

Preferably, the haptic touch screen means are coupled to a control electronics configured to:
- display a plurality of Graphical User Interface (GUI) items on said haptic touch screen means, wherein each displayed GUI item is associated with a respective secondary control function; and,
- in response to, and based/depending on, a touch of the user on a displayed GUI item,
   - provide the user (in particular, the user's finger(s)) with a corresponding haptic feedback and
   - activate/deactivate/control execution of the respective secondary control function associated with the touched GUI item.

Conveniently, the control electronics can be further configured to allow a user (e.g., by means of a predefined selection menu (and, if necessary, also respective sub-menus) displayed on the haptic touch screen means) to select and/or set up:
- the secondary control functions for which corresponding GUI items have to be displayed on the haptic touch screen means; and/or
- positions on the haptic touch screen means and/or operating features of the GUI items to be displayed.

Conveniently, the control stick includes, at an upper end thereof, a handgrip, wherein said UI means are provided on said handgrip. In this case, the handgrip may conveniently include an elongated portion and an upper portion arranged at an upper end of the elongated portion, wherein the haptic touch screen means are conveniently provided on the upper portion of the handgrip. Moreover, the UI means may conveniently include also hard-key-type UI devices (such as buttons, switches, levers, etc.) that can be conveniently provided on the elongated portion and/or the upper portion of the handgrip.

The integration on an avionic hand-operable control stick of touch screen means to replace traditional hard-key-type UI devices (such as buttons, switches, levers, etc.) with corresponding virtual (but physically and individually discernible) GUI items enables substantially-unlimited configuration, reconfiguration and customization of the control functions implementable via said avionic hand-operable control stick. In fact, any configuration, reconfiguration and customization can be easily managed via software and/or firmware changes (e.g., by suitably reprogramming the control electronics), thereby avoiding any impact on size and weight of the avionic hand-operable control stick and, hence, any safety and ergonomic issue. In other words, any request for an increase (or, more in general, a variation) in the number and/or type of control functions to be implemented via an avionic hand-operable control stick can be easily managed, with the present invention, via software/firmware changes with no impact on size and weight of the avionic hand-operable control stick. Additionally, it is worth noting that, as previously explained, a preferred embodiment of the present invention enables also user configuration/reconfiguration/customization of the control functions to be implemented via the haptic touch screen means and/or of the corresponding GUI items.

Moreover, the fact of using touch screen means provided with haptic technology allows adding sensory feedbacks (in particular, touch feedbacks) in bidirectional communications between a user and the MMI, thereby enriching/improving such communications and, hence, user experience (additionally, the avionic hand-operable MMI might be conveniently equipped also with means for providing users with additional sensory feedbacks, for example sound feedbacks, so as to further enrich/improve user experience).

In particular, it is worth noting that the present invention allows enhancing user experience through:
- improved usability (in fact, by restoring the sense of touch to otherwise flat, cold surfaces, haptic technology enables multisensory experience (e.g., based on sight, sound and touch), thereby improving usability of the MMI by a user; in particular, the confidence a user receives through touch feedback when selecting a virtual button improves usability by better involving user's senses);

- enhanced realism (in fact, haptic technology allows increasing the degree of realism in user experience by stimulating a larger number of user's senses; this is particularly relevant in simulation applications that traditionally rely only on visual and sound inputs; the addition of touch feedbacks, that can be different from point to point on the touch screen, allows enhancing the sense of realism felt by a user);
- restoration of mechanical feel (existing touch-screen-based devices lack physical feedbacks that humans frequently need to fully understand the context of their interactions; by providing users with intuitive and unmistakable touch feedbacks, haptic technology allows creating a more confident user experience and also improving safety by overcoming distractions; this is especially important when sound or visual feedbacks are insufficient, for example in industrial applications or in applications that may suffer from users' distractions, e.g., during a flight of an aircraft/spacecraft/drone).

Furthermore, the use of haptic touch screen means with the capability to provide users with realistic haptic feedbacks allows facilitating seamless transition from traditional avionic hand-operable MMIs fitted with hard-key-type UI devices to the innovative MMI according to the present invention, since haptic technology allows to realistically simulate touch interactions typical of hard-key-type UI devices, to which users are currently accustomed.

In addition, it is worth noting also that the combined use of haptic and touch screen technologies allows implementing virtual (but physically and individually discernible) GUI items that can have different shapes and/or aspects, and that can be associated with different haptic feedbacks. Therefore, the present invention provides the capability to simulate almost any type of hard-key-type UI device (e.g., toggle switches, push buttons, sliding sensors, etc.) along with the corresponding haptic feedback.

The avionic hand-operable MMI according to the present invention can be advantageously exploited on board an aircraft (such as an airplane or a rotorcraft/helicopter) or a spacecraft, whereby the main and secondary control functions can be, conveniently, functions for controlling operation of:
- the aircraft/spacecraft (e.g., for attitude/flight control), and/or
- systems/devices/apparatus/equipment installed on board said aircraft/spacecraft (e.g., an external sight system and/or a weapon aiming and firing system).

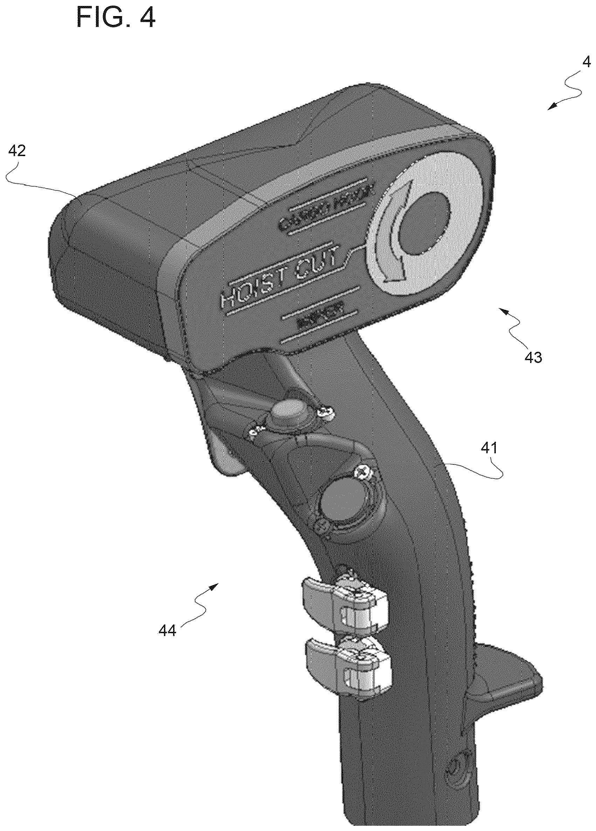

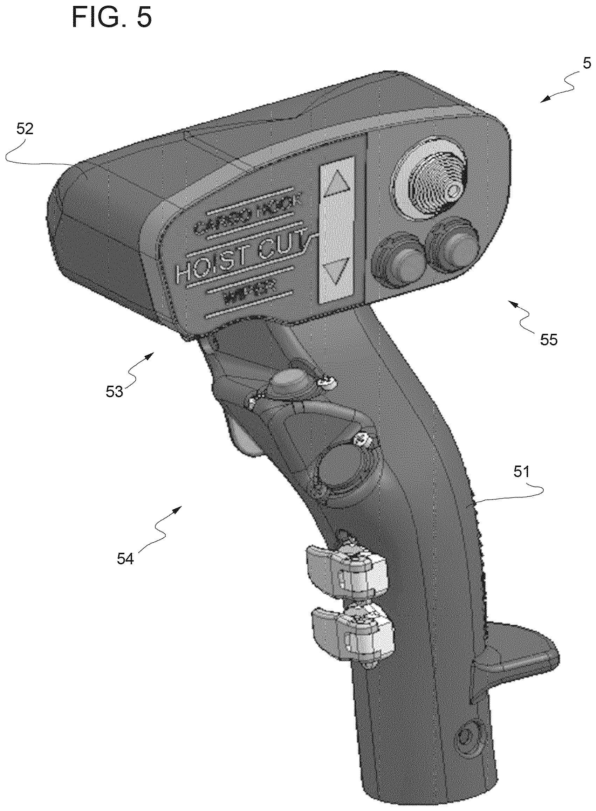

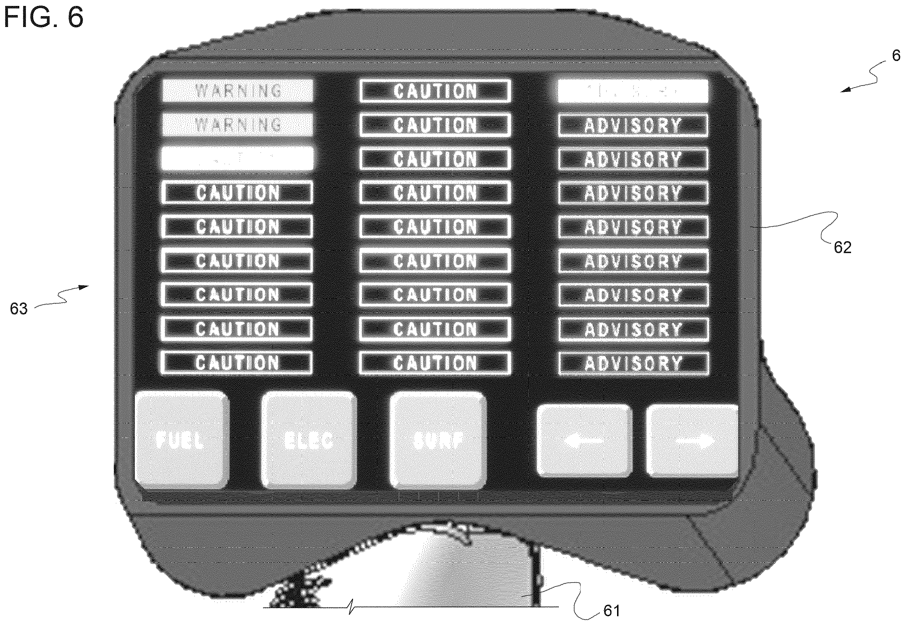

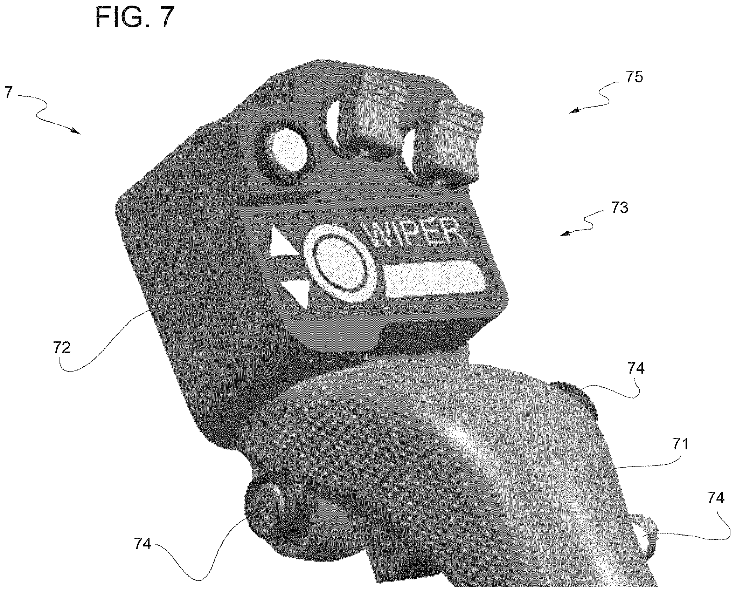

In this connection, Figures 4-7 show four examples of HOTAS devices according to four illustrative, non-limiting embodiments of the present invention. In particular, Figures 4-7 show, respectively, a fourth handgrip (denoted as a whole by 4), a fifth handgrip (denoted as a whole by 5), a sixth handgrip (denoted as a whole by 6) and a seventh handgrip (denoted as a whole by 7) for cyclic and collective control sticks of helicopters.

In detail, the fourth, fifth, sixth and seventh handgrips 4, 5, 6 and 7 include, each,
- a respective elongated portion 41, 51, 61, 71 and
- a respective upper portion 42, 52, 62, 72 arranged at an upper end of the respective elongated portion 41, 51, 61, 71, and fitted with respective haptic touch screen means 43, 53, 63, 73.

Moreover, in the fourth, fifth and seventh handgrips 4, 5 and 7, the respective elongated portions 41, 51 and 71 are fitted, each, with respective hard-key-type UI devices 44, 54, 74.

Furthermore, in the fifth handgrip 5, the respective upper portion 52 is fitted, in addition to the respective haptic touch screen means 53, also with additional hard-key-type UI devices 55.

Similarly, in the seventh handgrip 7, the respective upper portion 72 is fitted, in addition to the respective haptic touch screen means 73, also with additional hard-key-type UI devices 75.

It is worth noting that the fourth and fifth handgrips 4 and 5 represent innovative versions of the first handgrip 1, wherein:
- the first hard-key-type UI devices 13 of the first handgrip 1 have been completely replaced, in the fourth handgrip 4, with the haptic touch screen means 43; and
- the first hard-key-type UI devices 13 of the first handgrip 1 have been partially replaced, in the fifth handgrip 5, with the haptic touch screen means 53 (while hard-key-type UI devices 55 are still provided on the upper portion 52 of the fifth handgrip 5).

Similarly, the sixth handgrip 6 represents an innovative version of the second handgrip 2, wherein the first hard-key-type UI devices 23 of the second handgrip 2 have been completely replaced, in the sixth handgrip 6, with the haptic touch screen means 63.

Additionally, the seventh handgrip 7 represents an innovative version of the third handgrip 3, wherein the first hard-key-type UI devices 33 of the third handgrip 3 have been partially replaced, in the seventh handgrip 7, with the haptic touch screen means 73 (while hard-key-type UI devices 75 are still provided on the upper portion 72 of the seventh handgrip 7).

The avionic hand-operable MMI according to the present invention can be advantageously exploited also in a drone remote control system, whereby the main and secondary control functions can be, conveniently, functions for remotely controlling operation of:
- a drone (e.g., for attitude/flight control), and/or
- onboard systems/devices/apparatus/equipment of said drone (e.g., an external sight system and/or a weapon aiming and firing system).

Additionally, the avionic hand-operable MMI according to the present invention can be advantageously exploited also in a flight simulator, whereby the main and secondary control functions can be, conveniently, functions for controlling operation, in a simulated flight scenario, of:
- a virtual aircraft/spacecraft (e.g., for attitude/flight control), and/or
- virtual onboard systems/devices/apparatus/equipment of said virtual aircraft/spacecraft.

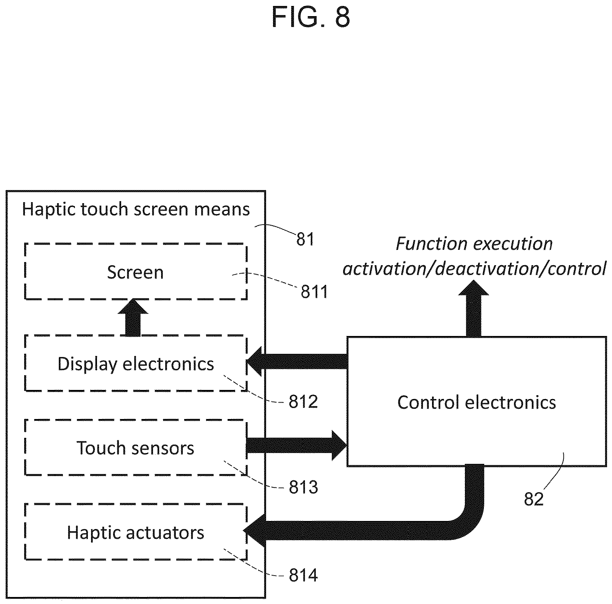

Figure 8 schematically illustrates (in particular, by means of a block diagram) an example of functional architecture of haptic touch screen means (denoted by 81) and a control electronics (denoted by 82) of an avionic hand-operable MMI according to an illustrative, non-limiting embodiment of the present invention.

In particular, the haptic touch screen means 81 (e.g., the haptic touch screen means 43, 53, 63, 73) include:
- a screen 811 and a display electronics 812 operable to display GUI items on the screen 811;
- touch sensors 813 (e.g., pressure sensors) configured to sense touches of a user on the screen 811 and to provide data/signals indicative of user's touches sensed and of respective touch-related features (e.g., positions of touched points, touch forces exerted on the screen 811, movement(s) of user's finger(s) on the screen 811, etc.); and
- haptic actuators 814 (e.g., standing wave generators) operable to provide haptic feedbacks on the screen 811.

The control electronics 82 is configured to:
- operate the display electronics 812 to display GUI items on the screen 811;
- receive from the touch sensors 813 the data/signals indicative of user's touches sensed and of respective touch-related features; and,

- based/depending on the data/signals received from the touch sensors 813,
   - detect a touch of a user on a displayed GUI item,
   - operate the haptic actuators 814 to provide the user (in particular, the user's finger(s)) with a corresponding haptic feedback, and
   - generate corresponding activation/deactivation/control data/signals/commands related to the respective secondary control function associated with the touched GUI item (wherein the generated activation/deactivation/control data/signals/commands are, then, sent/provided by the control electronics 82 to relevant onboard systems/devices/apparatus/equipment to activate/deactivate/control execution of the respective secondary control function associated with the touched GUI item).

In other words, when the screen 811 is touched, the control electronics 82 detects position of the user's touch along with respective touch-related features (e.g., exerted force) based on the data/signals received from the touch sensors 813, and accordingly operates the haptic actuators 814 to generate a constructive superposition of sound waves (bending waves) at the touched point, thereby inducing, in the user, a feeling of having actually touched/pushed a hard-key-type UI device (e.g., a button).

Conveniently, the control electronics 82 can be further configured to:
- operate the display electronics 812 to display one or more predefined selection/setting GUI items on the screen 811;
- based/depending on the data/signals received from the touch sensors 813, detect one or more touches of a user on the displayed selection/setting GUI item(s) indicative of one or more user's instructions to select/set up
   - the secondary control functions for which corresponding GUI items have to be displayed on the screen 811, and/or
   - positions on the screen 811 and/or operating features of the GUI items to be displayed; and
- operate the display electronics 812 according to the user's instruction(s).

Conveniently, the haptic effect may be added by integrating standing wave generators and pressure sensors into a conventional touch screen so as to receive touch-related geometrical information items from the conventional touch screen and touch-force-related information items from the pressure sensors. Otherwise, as shown in Figure 8, a single set of touch sensors 813 (e.g., pressure sensors) may be advantageously used to provide both information types (i.e., touch-related geometrical information items and touch-force-related information items).

The haptic touch screen means 81 may be conveniently implemented, for example, by means of a haptic Liquid-Crystal Display (LCD).

From the foregoing, the technical advantages and the innovative features of the present invention are immediately clear to those skilled in the art.

In particular, it is important to stress the point that the avionic hand-operable MMI according to the present invention is more easily reconfigurable/modifiable and is affected by fewer problems of space and weight and fewer safety and ergonomic issues than existing avionic hand-operable MMIs fitted with hard-key-type UI devices.

Furthermore, additional technical advantages of the present invention are:
- almost unlimited possibilities of configuring, reconfiguring and customizing the control functions implemented by the MMI, without increasing dimensions and weight thereof;
- control functions and haptic feedbacks are customizable via software/firmware modifications, whereby it is no longer necessary to manufacture and qualify prototypes of hard-key-type UI devices (e.g., switches and buttons);
- no more need to buy and store single components, thereby reducing costs and delivery times of components;
- backlight panels are no longer necessary; in fact, labels and indications are provided directly by the displayed GUI items;
- dramatic weight reduction due to reduction in cabling and in amount of switches/push buttons;
- customizable graphics; and
- high design flexibility as for number and type of implemented functions.

Additionally, it is worth noting also that the present invention has the additional advantage of merging modern, pervasive habit of using touch screens (due to universal use of smartphones, tablets, etc.) with the request/necessity for more and more functions to be implemented via one and the same MMI.

In conclusion, it is clear that numerous modifications and variants can be made to the present invention, all falling within the scope of the invention, as defined in the appended claims.

## Claims

1. Avionic hand-operable man-machine interface including a hand-operable control stick that is:
• designed to be gripped and moved by a user with one or two hands to carry out a main control function related to an aircraft/spacecraft/drone; and
• fitted with user interface means designed to be operated by the user with one or more fingers to perform secondary control functions related to the aircraft/spacecraft/drone;
**characterized in that** the user interface means include haptic touch screen means (43, 53, 63, 73, 81).

2. The avionic hand-operable man-machine interface of claim 1, further including a control electronics (82) that is coupled to the haptic touch screen means (43, 53, 63, 73, 81) and is configured to:
• display a plurality of graphical user interface items on said haptic touch screen means (43, 53, 63, 73, 81), wherein each displayed graphical user interface item is associated with a respective secondary control function; and,
• in response to, and based on, a touch of the user on a displayed graphical user interface item,
- provide the user with a corresponding haptic feedback and
- activate/deactivate/control execution of the respective secondary control function associated with the touched graphical user interface item.

3. The avionic hand-operable man-machine interface of claim 2, wherein the control electronics (82) is further configured to allow a user to select and/or set up:
• the secondary control functions for which corresponding graphical user interface items have to be displayed on the haptic touch screen means (43, 53, 63, 73, 81); and/or
• positions on the haptic touch screen means (43, 53, 63, 73, 81) and/or operating features of the graphical user interface items to be displayed.

4. The avionic hand-operable man-machine interface according to any claim 1-3, wherein the hand-operable control stick includes, at an upper end thereof, a handgrip (4, 5, 6, 7); wherein the user interface means are provided on said handgrip (4, 5, 6, 7).

5. The avionic hand-operable man-machine interface of claim 4, wherein the handgrip (4, 5, 6, 7) includes an elongated portion (41, 51, 61, 71) and an upper portion (42, 52, 62, 72) arranged at an upper end of the elongated portion (41, 51, 61, 71); wherein the haptic touch screen means (43, 53, 63, 73, 81) are provided on the upper portion (42, 52, 62, 72) of the handgrip (4, 5, 6, 7).

6. The avionic hand-operable man-machine interface of claim 5, wherein the user interface means include also hard-key-type user interface devices provided on the elongated portion (41, 51, 61, 71) and/or the upper portion (42, 52, 62, 72) of the handgrip (4, 5, 6, 7).

7. Aircraft equipped with the avionic hand-operable man-machine interface as claimed in any preceding claim.

8. Drone remote control system including the avionic hand-operable man-machine interface as claimed in any claim 1-6.

9. Flight simulator comprising the avionic hand-operable man-machine interface as claimed in any claim 1-6.

10. Spacecraft equipped with the avionic hand-operable man-machine interface as claimed in any claim 1-6.

## Patentansprüche

1. Avionische, von Hand bedienbare Mensch-Maschine-Schnittstelle mit einem von Hand bedienbaren Steuerknüppel, wobei der Steuerknüppel
• so konstruiert ist, dass er von einem Benutzer mit einer oder zwei Händen ergriffen und bewegt werden kann, um eine Hauptsteuerfunktion in Bezug auf ein(e) Luftfahrzeug/Raumfahrzeug/Drohne auszuführen; und
• Benutzerschnittstellenmittel aufweist, die so gestaltet sind, dass sie vom Benutzer mit einem oder mehreren Fingern bedient werden können, um sekundäre Steuerfunktionen in Bezug auf das bzw. die Luftfahrzeug/Raumfahrzeug/Drohne auszuführen;
**dadurch gekennzeichnet, dass** die Benutzerschnittstellenmittel haptische berührungsempfindliche Bildschirm-Mittel (43, 53, 63, 73, 81) aufweisen.

2. Avionische, von Hand bedienbare Mensch-Maschine-Schnittstelle nach Anspruch 1, die ferner eine Steuerelektronik (82) enthält, die mit den haptischen berührungsempfindlichen Bildschirm-Mitteln (43, 53, 63, 73, 81) gekoppelt ist und konfiguriert ist zum
• Anzeigen einer Vielzahl von grafischen Benutzerschnittstellen-Elementen auf den haptischen berührungsempfindlichen Bildschirm-Mitteln (43, 53, 63, 73, 81), wobei jedes angezeigte grafische Benutzerschnittstellen-Element mit einer jeweiligen sekundären Steuerfunktion assoziiert ist; und
• ansprechend und basierend auf einer Berührung des Benutzers auf einem angezeigten grafischen Benutzerschnittstellen-Element, zum
- Vorsehen einer entsprechenden haptischen Rückmeldung an den Benutzer und
- Aktivieren/Deaktivieren/Steuern der Ausführung der jeweiligen sekundären Steuerfunktion, die mit dem berührten grafischen Benutzerschnittstellen-Element verknüpft ist.

3. Avionische, von Hand bedienbare Mensch-Maschine-Schnittstelle nach Anspruch 2, wobei die Steuerelektronik (82) ferner so konfiguriert ist, dass sie es einem Benutzer ermöglicht, Folgendes auszuwählen und/oder einzustellen:
• die sekundären Steuerfunktionen, für die entsprechende grafische Benutzerschnittstellen-Elemente auf den haptischen berührungsempfindlichen Bildschirm-Mitteln (43, 53, 63, 73, 81) angezeigt werden müssen; und/oder
• Positionen auf den haptischen berührungsempfindlichen Bildschirm-Mitteln (43, 53, 63, 73, 81) und/oder Funktionsmerkmale der anzuzeigenden grafischen Benutzerschnittstellen-Elemente.

4. Avionische, von Hand bedienbare Mensch-Maschine-Schnittstelle nach einem der Ansprüche 1 bis 3, wobei der von Hand bedienbare Steuerknüppel an seinem oberen Ende einen Handgriff (4, 5, 6, 7) aufweist; wobei die Benutzerschnittstellenmittel an dem Handgriff (4, 5, 6, 7) vorgesehen sind.

5. Avionische, von Hand bedienbare Mensch-Maschine-Schnittstelle nach Anspruch 4, wobei der Handgriff (4, 5, 6, 7) einen langgestreckten Abschnitt (41, 51, 61, 71) und einen oberen Abschnitt (42, 52, 62, 72) aufweist, der an einem oberen Ende des langgestreckten Abschnitts (41, 51, 61, 71) angeordnet ist; wobei die haptischen berührungsempfindlichen Bildschirm-Mittel (43, 53, 63, 73, 81) an dem oberen Abschnitt (42, 52, 62, 72) des Handgriffs (4, 5, 6, 7) vorgesehen sind.

6. Avionische, von Hand bedienbare Mensch-Maschine-Schnittstelle nach Anspruch 5, wobei die Benutzerschnittstellenmittel auch Benutzerschnittstellenvorrichtungen vom Tasten-Typ aufweisen, die an dem langgestreckten Abschnitt (41, 51, 61, 71) und/oder dem oberen Abschnitt (42, 52, 62, 72) des Handgriffs (4, 5, 6, 7) vorgesehen sind.

7. Luftfahrzeug, ausgestattet mit der avionischen, von Hand bedienbaren Mensch-Maschine-Schnittstelle nach einem der vorhergehenden Ansprüche.

8. Drohnen-Fernsteuerungssystem mit der avionischen, von Hand bedienbaren Mensch-Maschine-Schnittstelle nach einem der Ansprüche 1 bis 6.

9. Flugsimulator mit der avionischen, von Hand bedienbaren Mensch-Maschine-Schnittstelle nach einem der Ansprüche 1 bis 6.

10. Raumfahrzeug, ausgestattet mit der avionischen, von Hand bedienbaren Mensch-Maschine-Schnittstelle nach einem der Ansprüche 1 bis 6.

## Revendications

1. Interface homme-machine à actionnement manuel d'avionique comportant une manette de commande à actionnement manuel qui est :
• conçue pour être saisie et déplacée par un utilisateur à l'aide d'une ou deux mains pour effectuer une fonction de commande principale liée à un aéronef/un engin spatial/un drone ; et
• munie de moyens d'interface utilisateur conçus pour être actionnés par l'utilisateur à l'aide d'un ou plusieurs doigts pour réaliser des fonctions de commande secondaires liées à l'aéronef/l'engin spatial/au drone ;
**caractérisée en ce que** les moyens d'interface utilisateur comportent des moyens d'écran tactile haptique (43, 53, 63, 73, 81).

2. Interface homme-machine à actionnement manuel d'avionique selon la revendication 1, comportant en outre des composants électroniques de commande (82) qui sont couplés aux moyens d'écran tactile haptique (43, 53, 63, 73, 81), et configurée pour :
• afficher une pluralité d'éléments d'interface utilisateur graphique sur lesdits moyens d'écran tactile haptique (43, 53, 63, 73, 81), dans laquelle chaque élément d'interface utilisateur graphique affiché est associé à une fonction de commande secondaire respective ; et,
• en réponse à, et sur la base d'un contact de l'utilisateur sur un élément d'interface utilisateur graphique affiché,
- fournir à l'utilisateur une rétroaction haptique correspondante et
- activer/désactiver/commander l'exécution de la fonction de commande secondaire respective associée à l'élément d'interface utilisateur graphique touché.

3. Interface homme-machine à actionnement manuel d'avionique selon la revendication 2, dans laquelle les composants électroniques de commande (82) sont en outre configurés pour permettre à un utilisateur de sélectionner et/ou de mettre en place :
• les fonctions de commande secondaires pour lesquelles des éléments d'interface utilisateur graphique correspondants doivent être affichés sur les moyens d'écran tactile haptique (43, 53, 63, 73, 81) ; et/ou
• des positions sur les moyens d'écran tactile haptique (43, 53, 63, 73, 81) et/ou des caractéristiques de fonctionnement des éléments d'interface utilisateur graphique devant être affichés.

4. Interface homme-machine à actionnement manuel d'avionique selon l'une quelconque des revendications 1 à 3, dans laquelle la manette de commande à actionnement manuel comporte, à une extrémité supérieure de celui-ci, une poignée (4, 5, 6, 7) ; dans laquelle les moyens d'interface utilisateur sont prévus sur ladite poignée (4, 5, 6, 7).

5. Interface homme-machine à actionnement manuel d'avionique selon la revendication 4, dans laquelle la poignée (4, 5, 6, 7) comporte une partie allongée (41, 51, 61, 71) et une partie supérieure (42, 52, 62, 72) agencée à une extrémité supérieure de la partie allongée (41, 51, 61, 71) ; dans laquelle les moyens d'écran tactile haptique (43, 53, 63, 73, 81) sont prévus sur la partie supérieure (42, 52, 62, 72) de la poignée (4, 5, 6, 7).

6. Interface homme-machine à actionnement manuel d'avionique selon la revendication 5, dans laquelle les moyens d'interface utilisateur comportent également des dispositifs d'interface utilisateur de type touche matérielle prévus sur la partie allongée (41, 51, 61, 71) et/ou la partie supérieure (42, 52, 62, 72) de la poignée (4, 5, 6, 7).

7. Aéronef équipé de l'interface homme-machine à actionnement manuel d'avionique selon l'une quelconque des revendications précédentes.

8. Système de commande à distance de drone comportant l'interface homme-machine à actionnement manuel d'avionique selon l'une quelconque des revendications 1 à 6.

9. Simulateur de vol comprenant l'interface homme-machine à actionnement manuel d'avionique selon l'une quelconque des revendications 1 à 6.

10. Engin spatial équipé de l'interface homme-machine à actionnement manuel d'avionique selon l'une quelconque des revendications 1 à 6.
